# EUROPÄISCHE PATENTSCHRIFT

(11) **EP 1 762 331 B1**
(45) Veröffentlichungstag und Bekanntmachung des Hinweises auf die Patenterteilung: **24.12.2008**
(21) Anmeldenummer: 05019759.9
(22) Anmeldetag: 12.09.2005
(51) Int. Cl.: B23Q 1/00, B23Q 17/00, B23Q 5/04, G08C 23/04

(54) **Spindel mit einem per Funk auslesbaren Datenerfassungselement**
Spindle with a sensor readable through radio waves
Broche avec capteur de données lisible par ondes radio

(43) Veröffentlichungstag der Anmeldung: 14.03.2007
(60) Teilanmeldung: 08168499.5
(73) Patentinhaber: Paul Müller GmbH & Co. KG Unternehmensbeteiligungen, 90411 Nürnberg (DE)
(72) Erfinder: Möller, Bernd, Dr., 91217 Hersbruck (DE); Verlemann, Edgar, Dr., 90480 Nürnberg (DE)
(74) Vertreter: Lösch, Christoph Ludwig Klaus

(56) Entgegenhaltungen:
- DE-A1- 1 954 643
- DE-A1- 10 007 126
- FR-A- 2 582 126
- US-A- 4 761 101
- US-A- 2005 134 436

## Beschreibung

Die Erfindung betrifft eine Spindel mit den Merkmalen des Oberbegriffs des Patentanspruchs 1.

DE 100 07 126 A1 offenbart eine Spindel für eine Werkzeugmaschine mit Datenerfassungselementen, einem Datenspeicherelement und einer Schnittstelle. Alle erwähnten Elemente sind dabei innerhalb des Spindelgehäuses angeordnet und untereinander drahtgebunden verbunden. Diese drahtgebundene Verbindung dient zur Übertragung der Daten von den Datenerfassungselementen zur Schnittstelle sowie zur Energieversorgung der einzelnen Komponenten. Diese spindelinterne Verdrahtung führt dabei zu einem erhöhten Platzbedart innerhalb des Spindelgehäuses und zieht einen komplizierten Aufbau und eine schwierige Montage der Spindel nach sich.

In US 2005/0134436 A1 wird ein System zur selektiven Auswahl eines bestimmten RFID-Chips aus einer Vielzahl von RFID-Chips beschrieben. Dort ist offenbart, dass RFID-Tags, die keine eigene Stromversorgung besitzen, durch Funkwellen eines Leseelements mit Energie versorgt werden können.

Der Erfindung liegt die Aufgabe zugrunde, eine Spindel für eine Werkzeugmaschine anzubieten, bei der aufgenommene Betriebs- und/oder Zustandsdaten besonders vorteilhaft auslesbar sind. Insbesondere soll der Zugang zu bestimmten Daten auf bestimmte Personengruppen beschränkt werden können.

Diese Aufgabe wird durch eine Spindel mit den Merkmalen des kennzeichnenden Teils des Patentanspruchs 1 in Verbindung mit den Merkmalen des Oberbegriffs gelöst. Vorteilhafte Ausführungsformen der Erfindung werden in den Unteransprüchen 2 - 6 realisiert.

Bei der erfindungsgemäßen Spindel ist ein Datenerfassungselement vorgesehen, welches als Funkchip ausgebildet und über ein Leseelement per Funk auslesbar ist. Damit ist zum Auslesen des Datenerfassungselements keine kabelgebundene Verbindung mehr erforderlich.

Nach einer vorteilhaften Ausführungsform besitzt der Funkchip keine eigene Energieversorgung und dem Funkchip wird beim Auslesen entsprechende Energie über die Funkwellen des Lesegeräts zugeführt. Der Funkchip kann dabei als passives RFID-Element (Radio-Frequency-Identifikation-Detektor) ausgebildet sein.

Bei RFID-Elementen strahlt ein Schreib-/ Lesegerät elektromagnetische Wellen aus und erzeugt damit ein elektromagnetisches Feld (Radiosender). Befindet sich ein mit einem speziellen Etikett, einem sog. Transponder, gekennzeichnetes Objekt im elektromagnetischen Feld, verhält dieses sich als Empfänger. Der Transponder nimmt dabei die Energie über eine Antennenspule auf (Induktion) und nutzt diese, um die auf einem Mikrochip gespeicherten Daten zurück an das Schreib-/ Lesegerät zu senden. Passive RFID-Elemente besitzen keine eigene Energiequelle und arbeiten ebenso wie das Schreib-/ Lesegerät sowohl als Empfänger als auch als Sender. Die vom Schreib-/Lesegerät auf diese Weise empfangenen Daten können dann an weitere EDV-Anwendungen weitergegeben werden.

Erfindungsgemäß istein externes Lesegerät vorgesehen, welches vom Benutzer der Spindel oder von einer für die Reparatur und den Service der Spindel zuständigen Person verwendet wird, von außen in die Nähe der Spindel herangeführt wird und damit in der Spindel in Funkchips als Datenerfassungselementen die Daten des Datenerfassungselements ausgelesen werden.

Wenn als Funkchip ein Chipelement ohne eigene Energieversorgung verwendet wird, ist es nicht erforderlich, das Datenerfassungselement von Seite der Werkzeugmaschine oder der Steuerung der Werkzeugmaschine entsprechend mit Energie zu versorgen. Damit besteht auch die Möglichkeit, noch nicht mit einer Werkzeugmaschine verbundene oder noch nicht vollständig angeschlossene Spindel hinsichtlich des Datenerfassungselements auszulesen.

Erfindungsgemäß weist die Spindel ein integriertes Lesegerät auf, um ebenfalls innerhalb der Spindel angeordnete Funkchips auszulesen.

Damit ist keine Kabelverbindung zum Auslesen des Datenerfassungselements zwischen dem Lesegerät bzw. dem Element zum Datenauslesen mehr erforderlich.

In einer besonders vorteilhaften Ausführungsform kann somit innerhalb der Spindel ein Lesegerät vorgesehen sein, welches über Funkwellen mit ebenfalls innerhalb der Spindel als Datenerfassungselement, nämlich als Funkchip ausgebildete Elemente, ohne eigene Stromversorgung kommunizieren und in den Funkchips erfaßte Daten auslest.

Durch derartige kabellose Datenerfassungselemente vereinfacht sich der Aufbau der Spindel und die Montage der Spindel.

Gemäß einer weiteren vorteilhaften Ausführungsform ist das Lesegerät mit einer Maschinensteuerung der Werkzeugmaschine verbindbar. Bei einem mobilen Lesegerät kann dies kabellos oder kabelgebunden geschehen. Bei einem Lesegerät, welches in die Spindel integriert ist, kann eine Verbindung, insbesondere eine Kabelverbindung, mit der Maschinensteuerung vorhanden sein.

Gemäß einer weiteren vorteilhaften Ausführungsform kann das Lesegerät zum Auslesen des Funkchips einer bestimmten Spindel, insbesondere der Spindel, in der das Lesegerät integriert ist, verwendet werden. Ferner kann über ein Lesegerät auch eine oder mehrere weitere Spindeln ausgelesen werden. Hierdurch ist es möglich, durch ein einzelnes Lesegerät mehrere Spindeln und die dort angebrachten Datenerfassungselemente auszulesen. Damit kann mit geringem Aufwand, z.B. in einer Maschinenhalle mit mehreren Werkzeugmaschinen von Spindeln, ein Auslesen von Datenerfiassungselementen stattfinden. Vorteilhafterweise besitzt der Funkchip einen Datenbereich, der nur durch ein externes Lesegerät und nicht durch ein Lesegerät der Spindel auslesbar ist. Bei dieser Ausführungsform kann die Spindel mit ihren Funkchips zum einen durch ein spindelintegriertes Lesegerät ausgelesen werden, wobei nur ein bestimmter Datenbereich ausgelesen wird. Ein weiterer Datenbereich des Funkchips kann durch ein mobiles Lesegerät einer externen Person, die z.B. für den Service oder zur Benutzung zuständig ist, ausgelesen werden. Das Leseelement kann femer mehrere wählbare separate Funksignale, z.B. auf verschiedenen Funkkanälen, zum separaten Auslesen verschiedener Funkchips innerhalb einer Spindel oder der Funkchips mehrerer Spindeln aufweisen. Hierzu kann eine Verbindung zwischen spindelintegriertem Leseelement und der Maschinensteuerung der Werkzeugmaschine bestehen zur Ansteuerung des Leseelements zur Auswahl der separaten Funksignale.

Damit kann der Zugang zu Informationen innerhalb des Funkchips von Seite der Maschinensteuerung bzw. vom Benutzer eines mobilen Lesegeräts gesteuert und kann festgelegt werden, welche Daten für wen zugänglich sind.

Durch ein Datenerfassungselement können Daten des Herstellers der Spindel (z.B. Seriennummer, Erstauslieferungsdatum, Gewährleistungsangaben, Leistungsdaten, Leistung/Drehmoment- und Drehzahlverläufe, Parametersätze für CNC-Steuerung, usw.) könnten gespeichert und beim Serviceeinsatz vor Ort ausgelesen werden. In Verbindung mit einer interner Sensorverarbeitung der Spindel könnten ggf. letzte Zustandsdaten vor einem Ausfall gespeichert werden (hierzu kann ggf. ein aktiver RFID mit eigener Energieversorgung verwendet werden).

Benutzer (z.B. der Endkunde) der Spindel können allgemein Lesegeräte für die RFID-Elemente der Spindel besitzen und damit z.B. per Internet dem Spindelhersteller zusätzliche Daten für die Ferndiagnose übermitteln. Dann müssten nicht ständig Daten ausgetauscht werden, sondern nur im Bedarfsfall.

Der Endkunde könnte auch ein RFID-Element für den Datenaustausch mit dem Spindelhersteller verwenden, d.h. es könnte der Einsatzort und die Maschinennummer vom Endkunden mit auf dem RFID-Element vermerkt werden. Mit diesen Daten könnte der Spindelhersteller Fehlerschwerpunkte und Maschinenprobleme beim Endkunden frühzeitig erkennen und die Werkinstandhaltung des Kunden auf diese Fehlerschwerpunkte hinweisen.

Die Spindel kann auch mit zwei oder mehreren RFID-Elementen versehen werden, einem RFID-Eiament nur für die internen Daten des Spindel herstellers (erster Datenbereich- nicht überschreibbar) und einem oder mehreren RFID-Elemente, die von Endkunden und Spindelhersteller überschrieben werden können.

Ein einziges RFID-Element kann auch einen erster überschreibbaren Datenbereich und einen zweiten nicht überschreibbaren Datenbereich aufweisen.

Bei der Endmontage der Spindel beim Spindelhersteller können RFID-Elemente mit den entsprechenden genannten Daten (s. Servicedaten) verbaut werden. Innerhalb der Lagerhaltung beim Spindelhersteller könnte dann der Lagerort und Fertigungszustand dieser Spindel automatisch erfasst und entsprechend für die Versand- und Vertriebsabwicklung verwendet werden.

Die Erfindung ist anhand eines Ausführungsbeispiels in den Zeichnungsfiguren weiter erläutert. Es zeigen:
- Fig. 1: eine Schnittdarstellung einer in einer Werkzeugmaschine mit Maschinensteuerung einbaubare Spindel,
- Fig. 2a: einer erste Detaildarstellung nach Fig. 1,
- Fig. 2b: eine zweite Detaildarstellung nach Fig. 1,
- Fig. 2c: eine dritte Detaildarstellung nach Fig. 1,
- Fig. 3: eine weitere Ausführungsform einer Spindel nach Fig. 1 in Schnittdarstellung sowie
- Fig.4: eine Schnittdarstellung einer in einer Werkzeugmaschine aufgenommenen Spindel, die durch ein externes Lesegerät auslesbare Datenerfassungseiemente aufweist.

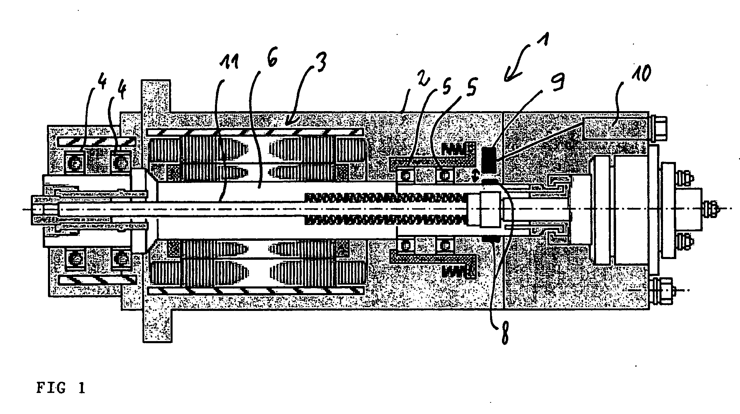

Fig. 1 zeigt in schematischer Schnittdarstellung eine an sich bekannte Spindel 1 mit einem Gehäuse 2, in dem ein Elektromotor 3 aufgenommen ist, der eine in den Lagern 4 und 5 aufgenommene Welle 6 mit Spannelement 7 zur Aufnahme eines nicht abgebildeten Werkzeugs antreibt. Die Spindel 1 besitzt ein in die Welle 6 integriertes oder an dieser z.B. umlaufend angebrachtes Datenertassungselement 8, das als Funkchip ausgebildet sind. Bei Rotation der Welle 6 können die rotierenden Datenerfassungselemente 8 durch ein Lesegerät 9 der Spindel 1 ausgelesen werden (uni- und/oder bidirektional, d. h. reines Auslesen des Datenerfassungselements 8 und/oder Beschreiben Datenerfassungselements 8 mit integriertem Speicher). Das Lesegerät 9 ist z.B. kabelgebunden mit einem weiteren Element 10 zur Datenverarbeitung und/oder -speicherung verbunden, welches eine Schnittstelle zur nicht abgebildeten Maschinensteuerung der Werkzeugmaschine aufweisen kann.

Das Datenerfassungselement 8 besitzt insbesondere keine eigene Stromversorgung und wird ausgelesen, indem das Lesegerät 9 mit den ausgesendeten Funkwellen die benötigte Energie für das Datenerfassungselement 8 zur Verfügung stellt. Ein derartiges kabelloses Datenerfassungselement 8 kann an Bauteilen angebracht werden, die mit kabelgebundenen Elementen z.B. aufgrund der Rotation des Bauteils oder des Platzbedarfs nicht erreichbar sind.

Durch das Datenerfassungselement 8 können z.B. Daten wie die Motortemperatur, Lagertemperatur und/oder der Spannzustand (Position der Zugstange 11 innerhalb der Welle 6, gespannt oder nicht-gespannt) ermitteln.

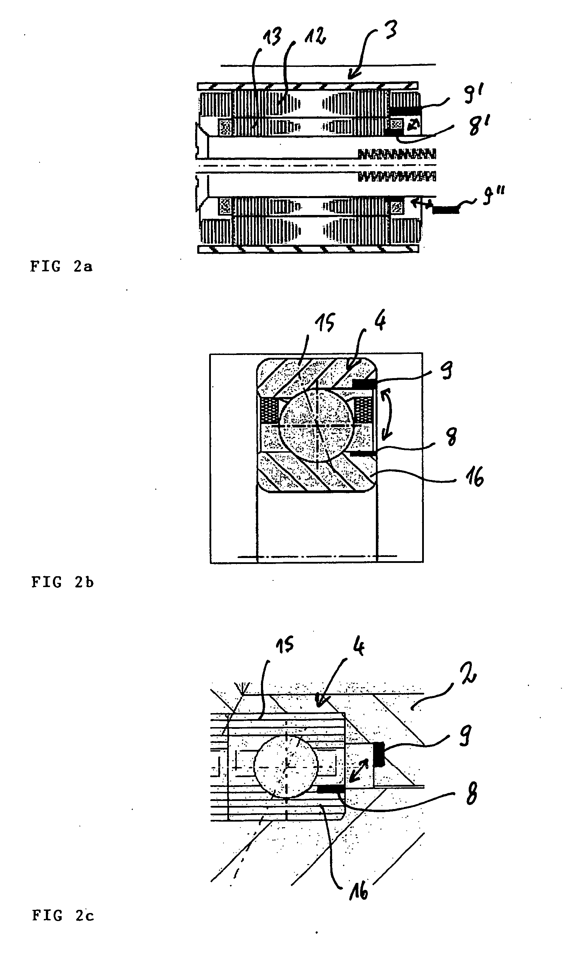

Fig. 2a zeigt ein weiteres Lesegerät 9', welches in den Stator 12 (z.B. in dessen Wickelkopf) des Elektromotors 3 einer Spindel 1 nach Fig.1 integriert ist. Ein korrespondierendes auslesbares Datenerfassungselement 8' (z.B. für Temperaturdaten) kann in den Rotor 15 des Elektromotors 3 integriert sein und mit diesem rotieren. Ferner kann alternativ oder ergänzend ein weiteres Lesegerät 9" vorgesehen sein, welches außerhalb des Stators 13 innerhalb des Gehäuses 2 der Spindel 1 angeordnet ist.

Fig. 2b zeigt weitere Möglichkeiten der Integration eines weiteren Lesegeräts 9, z.B. im stehenden Außenring 15 eines Lagers 4 oder 5, während im rotierenden Innenring 16 eines der Lager 4 oder 5 ein weiteres Datenerfassungselement 8 vorgesehen ist.

Gemäß Fig. 2c kann auch ein weiteres Lesegerät 9 im stehenden Gehäuse 2 der Spindel 1 vorgesehen sein, welches eine Funkverbindung zu einem weiteren Datenerfassungselement 8 in einem rotierenden Innenring 16 eines Lagers 4 oder 5 aufweist.

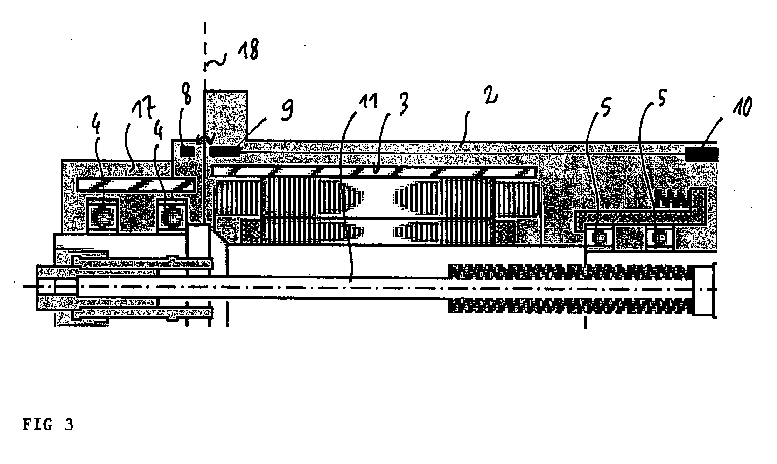

Fig. 3 zeigt eine weitere Möglichkeit der Anbringung eines Lesegeräts 9, welches in einer ersten Baugruppe der Spindel 1 (z.B. deren Gehäuse 2) angebracht ist, die lösbar mit einer zweiten Baugruppe der Spindel 1 verbindbar ist.

Die zweite Baugruppe (hier ein Lagerdeckel) besitzt ein Datenerfassungselement 8. Hierdurch kann über die Grenze 18 mehrerer Baugruppen hinweg übergreifend eine Kommunikation oder ein Auslesen von Daten zwischen Lesegerät 9 und Datenerfassungselement 8 kabellos stattfinden.

Die Montage und Demontage der Spindel 1 wird erleichtert, Lötverbindungen, Steckverbindungen und Einpassen von Kabelverbindungen entfallen. Damit entfällt auch die Gefahr von Kabelbrüchen oder unbeabsichtigten Massenschlüssen. Es wird eine störsichere Datenübertragung per Funk innerhalb der Spindel 1 ermöglicht.

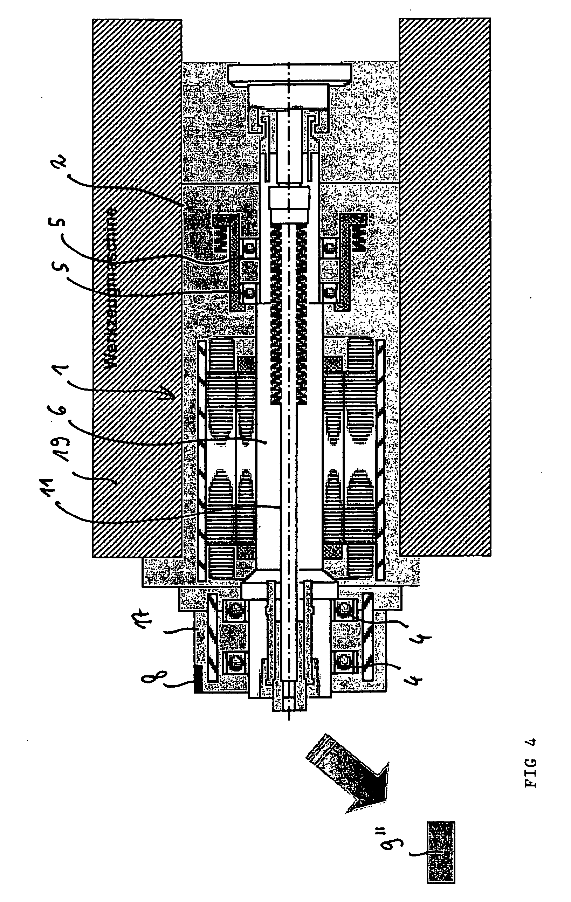

Fig. 4 zeigt eine in einer Werkzeugmaschine 21 aufgenommene Spindel 1 mit Gehäuse 2 mit Datenerfassungselement 8. Über ein mobiles Lesegerät 9", welches von einer Person z.B. für die Kontrolle, den-Service oder die Überwachung der Spindel 1 benutzt wird, kann das Lesegerät 9" in die Nähe der Spindel 1 verbracht werden und innerhalb der Spindel 1 vorhandene Datenerfassungselemente 8 per Funk auslesen.

Hierdurch können insbesondere mehrere Funkchips innerhalb einer Spindel 1 ausgelesen werden. Ferner können mehrere verschiedene Spindeln 1 mit unterschiedlichen Funkchips ausgelesen werden. Dieses mobile Lesegerät kann vom Benutzer als Handversion verwendet werden. Ferner kann im Arbeitsraum der Spindel 1 (z.B. in einer Maschinenhalle) ein derartiges externes Lesegerät 9" angebracht sein und die in den Spindeln aufgenommenen Funkchips regelmäßig ausgelesen zur weiteren Auswertung z.B. in ein Maschinenkvntrvllzentrum übermitteln.

### BEZUGSZEICHEN

- 1: Spindel
- 2: Gehäuse
- 3: Elektromotor
- 4: Lager
- 5: Lager
- 6: Welle
- 7: Spannelement
- 8: Datenerfassungselement
- 9: Lesegerät/Leseelement
- 10: Element zur Datenerfassung
- 11: Zugstange
- 12: Stator
- 13: Rotor
- 15: Außenring
- 16: Innenring
- 17: Lagerdeckel
- 18: Grenze
- 19: Werkzeugmaschine

## Patentansprüche

1. Spindel für eine Werkzeugmaschine, insbesondere Motorspindel mit einem Gehäuse (2) zur Aufnahme eines Elektromotors (3) und einer von diesem antreibbaren Welle (6), insbesondere mit einer Werkzeugaufnahme für ein Werkzeug zur Werkstückbearbeitung, wobei mindestens ein Datenerfassungselement (8, 8') zur Aufnahme von Betriebs- und/oder Zustandsdaten der Spindel (1) sowie ein externes Lesegerät (9") zum Auslesen des Datenerfassungselements (8, 8') vorgesehen sind,
**dadurch gekennzeichnet, dass**
- das Datenerfassungselement (8, 8') als Funkchip ausgebildet und über das externe Lesegerät (9'') per Funk auslesbar ist,
- die Spindel (1) ein integriertes Leseelement (9, 9') zum Auslesen eines Funkchips innerhalb der Spindel (1) aufweist, und
- die Spindel (1) mehrere Funkchips aufweist, die zum Teil durch das interne Leseelement (9, 9') und zum Teil durch das externe Lesegerät (9") auslesbar sind.

2. Spindel nach Anspruch 1,
**dadurch gekennzeichnet, daß** der Funkchip keine eigene Energieversorgung aufweist und dem Funkchip beim Auslesen entsprechende Energie Ober die Funkwellen des Leseelementes (9, 9', 9'') zugeführt wird.

3. Spindel nach einem der vorhergehenden Ansprüche,
**dadurch gekennzeichnet, daß** das Leseelement (9, 9', 9'') mit einer Maschinensteuerung der Werkzeugmaschine (19) verbindbar ist.

4. Spindel nach einem der vorhergehenden Ansprüche,
**dadurch gekennzeichnet, daß** das Leseelement (9, 9', 9") zum Auslesen des Funkchips derselben Spindel (1) und zum Auslesen der Funkchips benachbarter Spindeln vorgesehen ist.

5. Spindel nach Anspruch 1,
**dadurch gekennzeichnet, daß** der Funkchip einen Datenbereich aufweist, der nur durch das externe Leseelement (9") und nicht durch das integrierte Leseelement (9, 9') der Spindel auslesbar ist.

6. Spindel nach einem der vorhergehenden Ansprüche,
**dadurch gekennzeichnet, daß** das Leseelement (9, 9', 9'') mehrere wählbare separate Funksignale zum separaten Auslesen verschiedener Funkchip aufweist.

## Claims

1. Spindle for a machine tool, in particular a motor spindle having a housing (2) for holding an electric motor (3) and a shaft (6) which can be driven by it, in particular having a tool holder for a tool for workpiece machining, with at least one data acquisition element (8, 8') being provided in order to receive operating and/or state data relating to the spindle (1) as well as an external read element (9'') in order to read a data acquisition element (8, 8'),
**characterized in that**
- the data acquisition element (8, 8') is in the form of a radio chip and can be read by radio via an external read element (9''),
- the spindle (1) has an integrated read element (9, 9') for reading a radio chip within the spindle (1), and
- the spindle (1) has a plurality of radio chips, some of which can be read by the internal read element (9, 9'), and some of which can be read by the external read element (9").

2. Spindle according to Claim 1,
**characterized in that** the radio chip does not have its own power supply, and the radio chip is supplied with appropriate power for reading via the radio waves of the read element (9, 9', 9'').

3. Spindle according to one of the preceding claims,
**characterized in that** the read element (9, 9', 9'') can be connected to a machine controller for the machine tool (19).

4. Spindle according to one of the preceding claims,
**characterized in that** the read element (9, 9', 9'') is intended to read the radio chip of the same spindle (1) and to read the radio chips of adjacent spindles.

5. Spindle according to Claim 1,
**characterized in that** the radio chip has a data area which can be read only by the external read element (9") and not by the integrated read element (9, 9') for that spindle.

6. Spindle according to one of the preceding claims,
**characterized in that** the read element (9, 9', 9'') has a plurality of separate radio signals, which can be selected, in order to separately read different radio chips.

## Revendications

1. Broche pour une machine-outil, notamment broche motorisée comprenant une boîtier (2) pour recevoir une moteur électrique (3) et un arbre (6) pouvant être entraîné par celui-ci, notamment avec un attachement d'outil pour un outil destiné à l'usinage de pièces, au moins un élément d'acquisition de données (8, 8') étant prévu pour collecter des données de fonctionnement et/ou d'état de la broche (1) ainsi qu'un lecteur (9'') externe pour lire l'élément d'acquisition de données (8, 8'),
**caractérisée en ce que**
- l'élément d'acquisition de données (8, 8') est réalisé sous la forme d'une puce radioélectrique et peut être lu par voie radioélectrique par le lecteur externe (9''),
- la broche (1) présente un élément de lecture (9 9') intégré pour lire une puce radioélectrique à l'intérieur de la broche (1) et
- la broche (1) présente plusieurs puces radioélectriques qui peuvent être lues en partie par l'élément de lecture interne (9, 9') et en partie par le lecteur externe (9'').

2. Broche selon la revendication 1, **caractérisée en ce que** la puce radioélectrique ne présente pas de source d'énergie propre et l'énergie correspondante est acheminée à la puce radioélectrique lors de la lecture par le biais des ondes radioélectriques de l'élément de lecture (9, 9', 9'').

3. Broche selon l'une des revendications précédentes, **caractérisée en ce que** l'élément de lecture (9, 9', 9'') peut être relié avec une commande de machine de la machine-outil (19).

4. Broche selon l'une des revendications précédentes, **caractérisée en ce que** l'élément de lecture (9, 9', 9'') est prévu pour lire la puce radioélectrique de la même broche (1) et pour lire les puces radioélectriques des broches voisines.

5. Broche selon la revendication 1, **caractérisée en ce que** la puce radioélectrique présente une zone de données qui peut seulement être lue par l'élément de lecture externe (9'') et pas par l'élément de lecture intégré (9, 9') de la broche.

6. Broche selon l'une des revendications précédentes, **caractérisée en ce que** l'élément de lecture (9, 9', 9'') présente plusieurs signaux radioélectriques séparables au choix pour la lecture séparée de différentes puces radioélectriques.
